# EUROPEAN PATENT SPECIFICATION

(11) **EP 2 166 864 B1**
(45) Date of publication and mention of the grant of the patent: **16.08.2017**
(21) Application number: 07786988.1
(22) Date of filing: 02.07.2007
(51) Int. Cl.: A23B 4/03, A23L 3/40

(54) **METHOD FOR DRYING FOOD PRODUCTS AND INSTALLATION TO CARRY OUT SAID METHOD**
VERFAHREN ZUM TROCKNEN VON NAHRUNGSMITTELN UND EINRICHTUNG ZUM DURCHFÜHREN DIESES VERFAHRENS
PROCÉDÉ POUR SÉCHER DES PRODUITS ALIMENTAIRES ET INSTALLATION POUR METTRE EN UVRE LEDIT PROCÉDÉ

(43) Date of publication of application: 31.03.2010
(73) Proprietor: IRTA - Institut Recerca I Tecnologia Agroalimentar, 08007 Barcelona (ES)
(72) Inventor: COMAPOSADA BERINGUES, Josep, E-08007 Barcelona (ES); ARNAU ARBOIX, Jacint, E-08007 Barcelona (ES); GOU BOTO, Pere, E-08007 Barcelona (ES); MONFORT BOLÍVAR, José María, E-08007 Barcelona (ES)
(74) Representative: Oficina Ponti, SLP
(86) International application number: PCT/EP2007/056644
(87) International publication number: WO 2009/003516

(56) References cited:
- DE-A1- 3 009 119
- DE-A1- 3 514 693
- DE-A1- 3 524 131
- DE-A1- 3 721 982
- DE-A1- 10 221 254
- FR-A- 2 787 179

## Description

The present invention refers to a method for drying food products, to an installation to carry out said method and to the use of said installation to carry out the simultaneous drying of batches of food products with production dates distributed along time.

### BACKGROUND OF THE INVENTION

The traditional production method of determined food products comprises a long drying step during which a reduction on the water content of the product is carried out, and in which there are a series of physic, chemical, biochemical and microbiological changes which determine the organoleptic features of the final product.

In the case of dried raw meat products, such as dry-cured ham and dry-cured sausages, the drying takes places, after the addition of sodium chloride and curing salts, when the maturing and ageing processes of said products are carried out.

The drying is usually carried out in specific conditioned installations in which the temperature, the relative humidity and the environment ventilation are regulated. Said installations are usually known as drying chambers.

The products stay in the drying chambers until the desired weight loss is obtained. Along the drying process, the conditions of temperature, relative humidity and ventilation change according to the physical-chemical features of the product at the different steps of the process.

The long period of time in which the product must stay at the drying chambers, and also the great cost of the air-conditioning equipments, determine that now said drying chambers are designed as chambers of great dimensions permitting to dry great batches of product.

However, one of the problems of the conventional drying chambers is the lack of uniformity of the drying conditions in the different points of said chambers. Indeed, the great dimensions cause inevitably the air velocity to change depending on the measure point, and it can change sometimes from 0.5 m/s to 2.5 m/s in the same drying chamber. This lack of uniformity in the drying conditions involves a lack of homogeneity of the pieces of product when the drying process ends, which affects negatively in the final quality of said products.

To prevent said lack of homogeneity in the final product, the manufacturers usually extend the time of the drying process until it is obtained a reduction of the difference in the loss of weight of the pieces. However, this practice has the drawback that it affects negatively the productivity of the drying chambers.

The factories of food products requiring a drying process must have installations or drying chambers with refrigerating equipments dimensioned to satisfy the punctual power demands the drying process requires. This results in a very high investment in refrigerating equipments which affects considerably in the final cost of the product. In the first steps of the drying process more water of the product is extracted than in the subsequent steps, so that the installed power is excessive to satisfy the demand during the majority of the drying time, and consequently, the performance of said power is very low.

The monitoring of the drying process in the installations requires the presence of skilled people adjusting in each moment the drying conditions to the physical-chemical features of the product, trying to obtain homogeneous drying conditions, if possible.

It is known that, to obtain the greatest homogeneity and performance in the drying process, it is convenient the conditions to tend to a Biot number greater than 100.

The Biot number is an adimensional parameter comparing the resistance to the water diffusion inside the product (internal resistance), with the resistance to the transfer of water vapour at the interphase air-product (external resistance).

It is known that for Biot number greater than 100 the external resistance, or the resistance to the transfer of water vapour at the interphase air-product, can be ignored, so that the drying process is controlled by the internal resistance or resistance to the water diffusion in the product itself.

It is also known that the Biot number increases with the velocity of the air flow surrounding the product, so that, in practice, in drying conditions with Biot number greater than 100, the velocity of the air flow surrounding the product has, for a preset product, temperature and humidity, a preset value above which it is difficult to increase the water extraction performance. Therefore, even though the velocity of the air is increased, the water extraction performance will not increase, because this performance will be controlled by the internal resistance or resistance to the water diffusion inside the product itself.

The condition in which the drying is carried out in the present drying chambers is very far from a Biot number greater than 100, because to keep a Biot number greater than 100 in all the points of the drying chamber very great air velocities would be necessary at the exit of the nozzles of the ventilation system.

Nowadays, the planning of the drying process in the factories of food products which require a long drying step, such as raw cured meat products, must be carried out planning the availability of several installations or drying chambers for drying product batches with production dates distributed along time, so that, as stated above, said product can stay from the beginning to the end of the drying process in the same chamber or installation.

However, several simultaneous drying chambers or installations, each with a different batch product, have the drawback that requires several skilled people to control the start and the operation of said installations, and also monitoring the process in each installation.

To carry out the drying of food products there are known processes, such as that described in Italian patent IT 1154177, with alternating steps of intense drying, during which the product is subjected to an air flow greater than a minimum preset value, and slight drying or resting steps, in which the air flow is very low or is absent. It is known that these processes with alternating drying steps help the redistribution of the humidity gradient along the whole thickness of the product, which involves a reduction of the time of the conventional drying process.

Said Italian patent IT 1154177 discloses a drying process by cycles for cured draw sausages, in which the different steps are carried out in a drying chamber provided with a closed circuit of conditioned air and with a fan of axial flow, installed inside said chamber, which is operated periodically to create the air flow responsible of the intense drying. Said fan of axial flow is placed next to the air entrance tube of the drying chamber, and has a power greater than that of the fan which provides air to said chamber, so that it generates an additional air circuit.

The drying installation described in said Italian patent has the drawback that the dimensions of the drying chamber cause, as the conventional drying chambers, a lack of uniformity in the drying conditions. Said lack of uniformity is an important drawback making the control and monitoring of the process difficult, and involves inevitably a greater or lower lack of homogeneity of the obtained final product.

On the other hand, the process of the Italian patent, as the conventional processes, has the drawback that the planning of the drying of product batches with production dates distributed along time is conditioned by the availability of several drying chambers in a determined moment.

Document DE3524131 describes a process for energy-saving drying of products of the food industry, the material to be dried being placed in a closed drying chamber, the weight loss of the material being measured and the air temperature and the air humidity in the drying chamber being controlled in relation to these values. A simplification of the moisture control with energy savings is achieved by dividing the drying into a plurality of time periods and in each period alternating short operating times of the order of magnitude of minutes with long idle time.

Document FR2787179 refers to a process wherein the products are given a thermal treatment as they pass back and forth through a treatment tunnel on conveyors. Air is warmed by a heat exchanger and circulated by a fan through the stacks of products on open trays. The direction of airflow is alternated periodically.

Document DE3721982 refers to a process and apparatus for controlling the course of drying of foods, in particular raw sausage, wherein it is proposed to measure the weight of the material, during the treatment thereof, essentially continuously at least on random samples and to derive from the measured values the weight decrease per unit of time. The air throughput is then controlled in dependence on the weight decrease per unit of time.

Document DE10221254 refers to a process to treat sausages in a dehydration chamber that includes two sensors to measure differential temperatures to determine the absolute air humidity. The temperature values are used as control unit input values. The absolute air humidity is used to regulate the dehydration process. This document also refers to an assembly in which the sensors determine the difference between the dry and wet temperature values, from which the absolute air humidity is derived.

Document DE3514693A describes a process and an apparatus for optimising the maturing and drying of sausage, wherein water is removed from the material to be treated by supplying optionally conditioned air, until the desired degree of drying and degree of maturity is achieved. The addition of the outside air is carried out in relation to the temperature and moisture in the treatment chamber and in relation to the suitability of the outside air to contribute to cooling and dehumidifying the air in the treatment chamber.

The above-mentioned documents disclose methods for drying food products, having all these methods the drawback that they do not allow the simultaneous drying, at the same time, of batches of product with production dates distributed along time. Thus, in the cited documents, the planning of the drying of product batches with different production dates is conditioned by the availability of several drying chambers in a determined moment.

### DESCRIPTION OF THE INVENTION

The object of the present invention is to solve said drawbacks, providing other advantages that will be described.

According to a first aspect of the present invention, a method permitting the drying of food products is provided.

According to a second aspect of the present invention, a drying installation to carry out said method to dry simultaneously food product batches with production dates distributed along time is provided.

According to said first aspect of the invention, a method is provided which is characterised in that it comprises the next steps:
a) to extract water from said food products in a first room, the products being subjected to an air flow of uniform velocity for all the products inside said room, said velocity being greater than a preset minimum value; such that permits the Biot number to be greater than 100 for all the product inside said rooms;
b) to increase the water activity of the surface of said products (by diffusion of water from inside) in a second room, said products being subjected to a resting phase without the air flow of step a);
c) to alternate cyclically steps a) and b), until a predetermined loss of weight of said products is reached according to the king of product to be dried.

Surprisingly, the described method has the next advantages with respect to the known method of the prior art:
- Greater homogeneity of the batches of obtained final products, because the conditions at which the drying is carried out are uniform for all the products;
- Greater performance of the drying process, because the conditions at which the extraction of water is carried out permit to obtain a Biot number which tends to be, or is, greater than 100;
- Greater control and monitoring of the drying method, because, between steps, the features physical-chemical of said products can be determined and said products can be weighted, so that the drying conditions can be adapted continuously according to the features of the product. This means a greater homogeneity and quality of the final product, and different kind of products (diameter, size, etc...) can be dried without surface crust problems of the methods of the prior art.
- Very important decrease of the time to carry out the drying process. Said saving of time is possible thanks to the greater control and monitoring of the process and because it is possible to establish extracting conditions about or of a Biot number greater than 100. Therefore, the drying performance is enormously increased without important risks to damage the quality of the final product.
- It enhances the planning of the drying process at the factory. As the process is carried out alternating the use of different rooms, it is possible to use said rooms to carry out the simultaneous drying, at the same factory, of batches of product with production dates distributed along time.

According to a second aspect of the invention, it is provided an installation to carry out the claimed drying method of food products, comprising at least a first room to extract water from said products including means to provide an air flow to said products, characterised in that it comprises at least a second room to carry out said resting phase of step b), means to move alternatively said products from one room to the other, and in that said first room is elongated and tunnel-like; its width being lower than a preset maximum value so that the velocity of said air flow is uniform at any point of said first room. The said installation is useful for drying batches of food products with production dates distributed along time.

Thanks to these features, it is obtained an installation for drying food products having the advantage that permits to carry out the drying in a reduced time and in very uniform conditions, which are close or at a Biot number greater than 100 for all the products. Therefore, the obtained final product is very homogeneous and has a great quality. Furthermore, as has been cited previously, as the drying is carried out in different rooms of the same drying installation, it is possible to plan the use of said rooms to carry out the drying simultaneously of batches of product with production dates distributed along time. Therefore, the power and investment cost in the equipment of said factory is optimised.

Another advantage of the described drying installation is that makes the control and monitoring of the method easier, and also its automation, because during the method, when the product exits or enters at said rooms the weight and physical-chemical features can be determined and, therefore, the conditions of the method can be adapted continuously according to the obtained information.

Furthermore, the installation of the present invention has the advantage that the method is applied to little batches of food products, because the dimensions of said first room in which the extraction of water is carried out, are reduced in practice and similar to those of a tunnel. This constitutes an additional factor to contribute to guarantee the homogeneity of the quality of the obtained final products.

In the present invention by "air flow of substantially uniform velocity" is meant an air flow whose variation of velocity in different points of said room does not affect the drying process of the product.

In the present invention by "drying" is meant any process in which it is carried out globally a water extraction from the product and that produces a preset loss of weight of said product.

According to the first aspect of the present invention, said velocity greater than a preset minimum value is such that the Biot number is greater than 100 for all the products inside said room. Therefore, the drying conditions to guarantee a maximum and homogeneous performance of water extraction, for a determined kind of product (thickness, composition, etc.) and determined conditions of humidity and temperature are assured.

Preferably, said method comprises the step of determining the weight and the physical-chemical features of said products and adjusting the staying time of said products in said steps a) and b), according to the value of said weight and said features.

Also preferably, said method comprises the step of determining the weight and the physical-chemical features of said products and adjusting the air velocity in said step a), according to the value of said weight and said features.

Also preferably, said method comprises the step of determining the weight and the physical-chemical features of said products and adjusting the humidity and temperature of the air in said steps a) and b), according to the value of said weight and said features.

Therefore, the conditions of the drying method are adapted, in the more convenient way, to the needs of the product, optimizing said process and guaranteeing always the quality of the final product.

Advantageously, said adjustment of the conditions of the method is done automatically in real time. Therefore, the optimization of the process is the greatest and the cost reduction is important.

Also advantageously, steps a) and b) of the method are carried out when the product moves continuously inside said rooms.

Therefore, the uniformity of the conditions at which steps a) and b) are carried out, is helped, even more.

Also advantageously, the adjusting in real time of the staying time of the products in steps a) and b) comprises the step of changing the velocity of continuous displacement of the product inside said rooms.

According to a first embodiment of the present invention, said food products are meat products, preferably said meat products are raw, also preferably, said raw meat products are cured and, once more, preferably, said raw meat products are cured and aged meat products.

According to a second embodiment of the present invention, said food products are cheeses, preferably pressed paste cheeses.

Advantageously, said products are raw fish, preferably salted raw fish.

According to the second aspect of the present invention, said installation comprises preferably means to determine the weight and the physical-chemical features of said products while said method is carried out.

Also preferably, said installation also comprises means to adjust the air velocity of step a), and/or the staying time of the products in steps a) and b), and/or the humidity and temperature of the air of said steps a) and b), according to the value of said weight and of said features.

Therefore, as stated previously, the condition at which the drying process is carried out can be adapted, according to the needs of the product.

Advantageously, said means for adjusting the conditions at which the method is carried out act automatically and in real time.

Also preferably, said installation comprises means to move continuously said food products inside said rooms. This feature is especially interesting when the room in which the resting phase is carried out is air-conditioned, so that the movement helps the uniformity of the conditions to which the product is exposed.

Also preferably, the velocity of said air flow is such that permits the Biot number to be greater than 100 for all the products inside the first room of the installation, so that, therefore, a maximum and homogeneous performance of water extraction is assured.

### BRIEF DESCRIPTION OF THE DRAWINGS

For a better understanding of what has been exposed a drawing is attached in which, diagrammatically and only as a non limitative example a practical case of embodiment is shown.

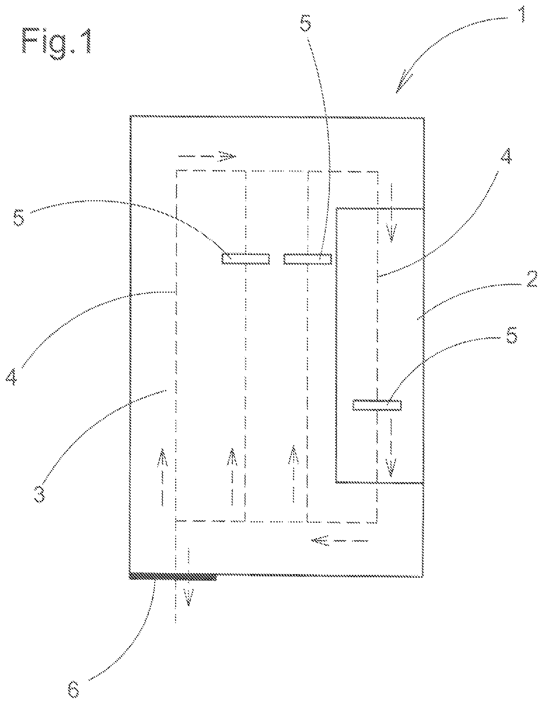

Fig. 1 shows a diagram of the installation of the present invention.

### DESCRIPTION OF PREFERRED EMBODIMENTS

Fig. 1 shows a diagram of a preferred embodiment of the installation 1 to carry out the drying method of the present invention.

Said installation 1 comprises a first room or tunnel 2 to extract water from the food products (reducing therefore the superficial water activity of said products) and a second room or chamber 3 in which is carried out the resting phase to permit the water inside the products to diffuse to the surface, so that the water activity of the surface of said products is increased, preventing therefore the appearance of crust at the surface.

The tunnel 2 and the chamber 3 are provided with guides 4 along which carriages 5 of movable hanger kind move continuously, being full of product.

The drying process begins when the product at the carriages 5 enters inside the chamber 3 through the door 6. Then said product moves continuously along the guides 4 to reach the tunnel 2. At said tunnel 2 the product, while moves continuously along said guides 4, is subjected to an air flow of uniform velocity and greater than a preset minimum value, which guarantees a Biot number greater than 100 for all the products and for a preset temperature and humidity conditions.

At the exit of the tunnel 2, the product moves continuously through the chamber 3 during a period of time necessary for permitting the water activity of the surface of the product to reach values about 0.90, at the beginning of the drying process, and about 0.85 at the end of the drying process.

Once the product has reached the desired superficial water activity, it enters again inside the tunnel 2.

The steps of extraction of water and resting are alternated in cycles until the desired loss of weight is reached.

The installation of the present invention has the advantage that the time needed to carry out the drying is very reduced with respect to the time used in the prior art drying chambers. Furthermore, the obtained product has a great quality and is very homogeneous.

Even though it is not shown, the installation 1 comprises means for determining the weight and the physical-chemical features of the products at the exit of the tunnel 2 of extraction of water and at the entrance of the chamber 3. The installation 1 also has means for adjusting automatically in real time the temperature, the humidity, the air velocity and the staying time of the products inside the tunnel 2 and the chamber 3, according to the weight value and to said physical-chemical features. Thanks to this feature, the conditions at which the drying is carried out are adapted at each moment to the needs of the product, so that the optimization of the drying process is the greatest and the cost reduction is very significant with respect to the prior art installations.

For a better understanding of the invention two examples of embodiment are described hereinafter.

### Example 1: Drying of spiced sausages of 32 mm of diameter.

The drying begins when the heating or fermentation period of said spiced sausages ends. The cured sausage is placed at an installation comprising a first elongated room (2), tunnel-like, to extract the water, and a second room (3) or resting chamber to increase the water activity at the surface of said product. In this example, the water extraction tunnel (2) and the resting chamber (3) are provided with control systems of the temperature, humidity and air velocity.

The products are placed hanged in carriages (5) of stainless steel of 1.10 m x 1.10 m and a height of 3.50 m, which are placed on a guide system (4) along which can move.

The width of the tunnel (2) is approximately 1.5 m, enough to place a line of carriages between the lateral walls of said tunnel and to guarantee a uniform air velocity at any point of said tunnel. The ventilation system is provided with air blowing tubes placed at the lower part of said tunnel (2).

In the described example, the air velocity inside the drying tunnel (2) is kept constant along the whole method and at a value of 2.5 m/s, which is, for this kind of product, the preset minimum value, above which it is difficult of increasing the performance of water extraction (value which permits to reach a Biot number greater than 100) .

The drying method is carried out by cyclical alternation of steps of water extraction and resting steps, until the desired decrease or reduction of weight is obtained, which, for spicy sausages of 32 mm of diameter, was a 30% of reduction of the weight of the fresh product before the drying process.

Inside the tunnel (2) water is extracted from the surface of the spicy sausage until values of surface water activity lower than 0.80 are obtained. Inside the resting chamber (3) the ventilation is the lowest necessary to keep a homogeneous temperature at the room. Therefore, the water activity of the surface of the product increases until values permitting to pass again the product through the tunnel without problems of surface crust (0.90 at the start of the drying process and 0.85 at the end of the drying process).

The stepped drying method has the advantage with respect to other drying methods that the loss of too much humidity at the surface of the product during the process is prevented, and therefore the presence of an undesired crust.

When each drying step ends, the product hanged in the carriages (5) moves along the guides (4) from the water extraction tunnel (2) to the resting chamber (3) and vice versa.

When it exits or enters at the water extraction tunnel (2) or resting chamber (3), each carriage (5) of product is weighted, and the texture and the content of water of the products of each carriage (5), among others, are determined, and also the water activity at the surface of said products. The obtained information serves to adjust along time the conditions of the method to the necessities of the product.

As it is shown in table 1, in the present example four drying phases are carried out, each of them alternating water extraction and resting steps.

**Table 1: Drying method of spicy sausages of 32 mm of diameter. Time length of the water extraction and resting steps and conditions in which said steps are carried out along the process.**

| | Water extraction tunnel (2) | | | Resting chamber (3) | | | |
|---|---|---|---|---|---|---|---|
| Drying phase | T°C | HR% | Time (min) | T°C | HR% | Time (min) | Partial time phase (h) |
| 1 | 19.3 | 55 | 10 | 17.2 | 66 | 50 | 21 |
| 2 | 17.7 | 48 | 10 | 15.0 | 56 | 40 | 72 |
| 3 | 17.2 | 48 | 5 | 14.9 | 53 | 40 | 27 |
| 4 | 15.0 | 55 | 5 | 14.4 | 53 | 50 | 58 |

In the first drying phase, water extraction steps of 10 minutes are alternated with resting steps of 50 minutes during a period of time of 21 hours.

In the second drying phase, the temperature and humidity of the air from the water extraction tunnel are reduced significantly, and water extraction steps of 10 minutes and resting steps of 40 minutes are alternated cyclically during a period of time of 72 hours.

The third drying phase is carried out during a period of time of 27 hours, and with humidity and temperature conditions very similar to those of the previous phase. The staying period inside the tunnel (2) is now reduced to 5 minutes and the staying period inside the resting chamber (3) is kept at 40 minutes.

Lastly, in the fourth drying phase, the air temperature inside the tunnel (2) is reduced significantly again, and water extraction steps of 5 minutes and resting steps of 50 minutes are alternated cyclically during a period of time of 58 hours.

The process ends, after about seven days, when is verified the reduction of weight of the product as desired.

Surprisingly, with the method of the invention, the drying time has been reduced a 25% with respect to the time used in any conventional drying process, and it is obtained at the same time a final product very homogeneous as water content, texture, pH, etc. and of great quality.

Even though in the previous example is not described, it is important to say that the adjustment of the staying time of the products at the drying and resting steps, and also the adjustment of the temperature and relative humidity of the air, can be done automatically in real time, according to the evolution of the weight and from the physical-chemical features of the product, permitting to optimize the method, to guarantee the final product and to reduce considerably the production costs.

### Example 2: Drying of pressed paste cheese of 0.5 kg.

The drying is carried out at an installation comprising a first elongated room (2), tunnel-like, to extract water, and a second room (3) or resting chamber to increase the water activity of the surface of the product. In this example, the tunnel (2) of water extraction (2) and the resting chamber (3) are rooms in which the temperature, the humidity and the air velocity are controlled.

The products are placed in carriages (5) made from stainless steel of 1.1 m x 1.1 m and a height of 3.5 m, which are placed on a guide system (4) along which can move.

The width of the tunnel (2) of extraction of water is approximately 1.5 m, enough to provide a line of carriages (5) between the lateral walls of said tunnel (2) and to guarantee a uniform air velocity at any point of said tunnel (2). The ventilation system is provided with air blowing tubes placed at the lower part of the tunnel (2) .

In the described example, the air velocity inside the tunnel (2) of water extraction is kept constant along the whole method and at a value of 2.5 m/s.

The drying method is carried out by cyclical alternation of water extraction steps with resting steps, until the desired decrease or reduction of weight is obtained, which, for this kind of cheese of 0.5 kg, is a 10% of reduction of the weight of the product before the drying process.

Inside the tunnel (2), water is extracted from the surface of the cheese until values of superficial water activity lower than 0.80 are obtained.

Inside the resting chamber (3), the ventilation is the lowest necessary to keep a homogeneous temperature at the room. Therefore, the water activity of the surface of the product increases until values permitting to pass again the product through the tunnel without problems of surface crust.

The stepped drying method has the advantage with respect to other drying methods that the loss of too much humidity at the surface of the product during the process is prevented, and therefore the presence of an undesired crust.

When each drying step ends, the product hanged in the carriages (5) moves along the guides (4) from the water extraction tunnel (2) to the resting chamber (3) and vice versa.

When it exits or enters at the water extraction tunnel (2) or resting chamber (3), each carriage (5) of product is weighted, and the texture and the content of water of the products of each carriage (5), among others, are determined, and also the water activity at the surface of said products. The obtained information serves to adjust along time the conditions of the method to the necessities of the product.

As it is shown in table 2, in the present example two drying phases are carried out, each of them alternating water extraction and resting steps.

**Table 2: Drying method of pressed paste cheese of 0.5 kg. Time length of the water extraction and resting steps and conditions in which said steps are carried out along the process.**

| | Water extraction tunnel (2) | | | Resting chamber (3) | | | |
|---|---|---|---|---|---|---|---|
| Drying phase | T°C | HR% | Time (min) | T°C | HR% | Time (min) | Phase partial time (h) |
| 1 | 15.3 | 63.4 | 5 | 15.3 | 63.4 | 30 | 19.7 |
| 2 | 14.2 | 69.9 | 3 | 14.2 | 69.9 | 30 | 13.5 |

The first drying phase was developed at 15.3 °C and 63.4% of relative humidity, with a staying time of 5 minutes inside the tunnel (2) of water extraction, and of 30 minutes in the resting chamber (3). The time of the phase was 19.7 hours. The second drying phase was developed at 14.2°C and at 69.9% of relative humidity, with a staying time of 3 minutes in the tunnel (2) of extraction of water, and of 30 minutes at the resting chamber (3) . The time of the phase was 13.5 hours, reaching the 10% of desired decrease for this product.

The method of the invention has the advantage that permits to reach the desired decrease for this cheese in 33 hours, while the conventional drying process of this cheese requires 10 days to reach the same desired weight decrease or loss.

Even though in the previous example is not described, it is important of say that the adjustment of the staying time of the products at the drying and resting steps, and also the adjustment of the temperature and relative humidity of the air, can be done automatically in real time, according to the evolution of the weight and from the physical-chemical features of the product, permitting to optimize the method, to guarantee the final product and to reduce considerably the production costs.

## Claims

1. Method for drying food products, **characterised in that** it comprises the following steps:
a) to extract water from said food products in a first room (2), the products being subjected to an air flow of uniform velocity for all the products inside said room (2), said velocity being greater than a preset minimum value such that permits the Biot number to be greater than 100 for all the product inside said room,
b) to increase the water activity of the surface of said products in a second room (3), said products being subjected to a resting phase without the air flow of step a) ;
c) to alternate cyclically steps a) and b), until a predetermined loss of weight of said products is reached according to the kind of product to be dried.

2. Method according to claim 1, **characterised in that** it comprises the step of determining the weight and the physical-chemical features of said products and adjusting the staying time of said products in said steps a) and b), according to the value of said weight and said features.

3. Method according to claim 1 or 2, **characterised in that** it comprises the step of determining the weight and the physical-chemical features of said products and adjusting the air velocity in said step a), according to the value of said weight and said features.

4. Method according to anyone of claims 2 and 3, **characterised in that** it comprises the step of determining the weight and the physical-chemical features of said products and adjusting the temperature and humidity of the air in said steps a) and b), according to the value of said weight and said features.

5. Method according to claim 1, **characterised in that** steps a) and b) are carried out while the product moves continuously inside said rooms (2, 3).

6. Method according to claim 1, **characterised in that** said food products are meat products.

7. Installation to carry out the drying method of food products according to claim 1, comprising at least a first room (2) to extract water from said products including means to provide an air flow to said products, **characterised in that** it comprises at least a second room (3) to carry out said resting phase of step b), means (5, 4) to move alternatively said products from one room to the other, and **in that** said first room (2) is elongate and tunnel-like, its width being lower than a preset maximum value so that the velocity of said air flow is uniform at any point of said first room (2).

8. Installation according to claim 7, **characterised in that** it comprises means to determine the weight and the physical-chemical features of said products when said method is carried out.

9. Installation according to claim 8, **characterised in that** it comprises means to adjust the air velocity of step a), according to the value of said weight and said features.

10. Installation according to claim 8 or 9, **characterised in that** it comprises means to adjust the staying time of the products in steps a) and b), according to the value of said weight and said features.

11. Installation according to anyone of claims 8, 9 and 10, **characterised in that** it comprises means to adjust the humidity and the temperature of the air in steps a) and b), according to the value of said weight and said features.

12. Installation according to anyone of claims 7 to 11, **characterised in that** it comprises means to move continuously said food products inside said first (2) and second (3) rooms.

13. Installation according to claim 7, **characterised in that** the velocity of said air flow is such that it permits the Biot number to be greater than 100 for all the products inside said first room (2).

14. Use of the installation according to claim 7, to simultaneously drying batches of food products with production dates distributed along time.

## Patentansprüche

1. Verfahren zum Trocknen von Lebensmittelprodukten, **dadurch gekennzeichnet, dass** dasselbe die folgenden Schritte aufweist:
a) Extrahieren von Wasser aus den Lebensmittelprodukten in einem ersten Raum (2), wobei die Produkte einem Luftstrom von gleichmäßiger Geschwindigkeit für alle Produkte innerhalb des Raums (2) unterzogen werden, wobei die Geschwindigkeit über einem voreingestellten Mindestwert liegt, so dass die Biot-Zahl für alle Produkte innerhalb des Raums größer als 100 sein kann;
b) Erhöhen der Wasseraktivität der Oberfläche der Produkte in einem zweiten Raum (3), wobei die Produkte eine Ruhephase ohne den Luftstrom von Schritt a) durchlaufen;
c) zyklisches Wechseln der Schritte a) und b), bis ein vorbestimmter Gewichtsverlust der Produkte erreicht wird, je nach Art des zu trocknenden Produkts.

2. Verfahren gemäß Anspruch 1, **dadurch gekennzeichnet, dass** dasselbe den Schritt eines Bestimmens des Gewichts und der physikalisch-chemischen Merkmale der Produkte und eines Einstellens der Verweilzeit der Produkte bei den Schritten a) und b) gemäß dem Wert des Gewichts und der Merkmale aufweist.

3. Verfahren gemäß Anspruch 1 oder 2, **dadurch gekennzeichnet, dass** dasselbe den Schritt eines Bestimmens des Gewichts und der physikalisch-chemischen Merkmale der Produkte und eines Einstellens der Luftgeschwindigkeit bei dem Schritt a) gemäß dem Wert des Gewichts und der Merkmale aufweist.

4. Verfahren gemäß einem der Ansprüche 2 und 3, **dadurch gekennzeichnet, dass** dasselbe den Schritt eines Bestimmens des Gewichts und der physikalisch-chemischen Merkmale der Produkte und eines Einstellens der Temperatur und Feuchtigkeit der Luft bei den Schritten a) und b) gemäß dem Wert des Gewichts und der Merkmale aufweist.

5. Verfahren gemäß Anspruch 1, **dadurch gekennzeichnet, dass** die Schritte a) und b) ausgeführt werden, während das Produkt sich kontinuierlich innerhalb der Räume (2, 3) bewegt.

6. Verfahren gemäß Anspruch 1, **dadurch gekennzeichnet, dass** die Lebensmittelprodukte Fleischprodukte sind.

7. Anlage zum Ausführen des Trocknungsverfahrens von Lebensmittelprodukten gemäß Anspruch 1, die zumindest einen ersten Raum (2) aufweist, um Wasser aus den Produkten zu extrahieren, einschließlich einer Einrichtung, um den Produkten einen Luftstrom bereitzustellen, **dadurch gekennzeichnet, dass** dieselbe Folgendes aufweist: zumindest einen zweiten Raum (3), um die Ruhephase von Schritt b) auszuführen, eine Einrichtung (5, 4), um die Produkte abwechselnd von einem Raum zu dem anderen zu bewegen, und dadurch, dass der erste Raum (2) länglich und tunnelähnlich ist, wobei die Breite desselben unter einem voreingestellten Höchstwert liegt, so dass die Geschwindigkeit des Luftstroms an jedem beliebigen Punkt des ersten Raums (2) gleichmäßig ist.

8. Anlage gemäß Anspruch 7, **dadurch gekennzeichnet, dass** dieselbe eine Einrichtung aufweist, um das Gewicht und die physikalisch-chemischen Merkmale der Produkte zu bestimmen, wenn das Verfahren ausgeführt wird.

9. Anlage gemäß Anspruch 8, **dadurch gekennzeichnet, dass** dieselbe eine Einrichtung zum Einstellen der Luftgeschwindigkeit von Schritt a) gemäß dem Wert des Gewichts und der Merkmale aufweist.

10. Anlage gemäß Anspruch 8 oder 9, **dadurch gekennzeichnet, dass** dieselbe eine Einrichtung zum Einstellen der Verweilzeit der Produkte bei den Schritten a) und b) gemäß dem Wert des Gewichts und der Merkmale aufweist.

11. Anlage gemäß einem der Ansprüche 8, 9 und 10, **dadurch gekennzeichnet, dass** dieselbe eine Einrichtung zum Einstellen der Feuchtigkeit und der Temperatur der Luft bei den Schritten a) und b) gemäß dem Wert des Gewichts und der Merkmale aufweist.

12. Anlage gemäß einem der Ansprüche 7 bis 11, **dadurch gekennzeichnet, dass** dieselbe eine Einrichtung zum kontinuierlichen Bewegen der Lebensmittelprodukte innerhalb des ersten (2) und zweiten (3) Raums aufweist.

13. Anlage gemäß Anspruch 7, **dadurch gekennzeichnet, dass** die Geschwindigkeit des Luftstroms derart ist, dass die Biot-Zahl für alle Produkte innerhalb des ersten Raums (2) größer als 100 sein kann.

14. Verwendung der Anlage gemäß Anspruch 7, um gleichzeitig Chargen von Lebensmittelprodukten mit Herstellungsdaten zu trocknen, die zeitmäßig verteilt sind.

## Revendications

1. Procédé de séchage de produits alimentaires, **caractérisé en ce qu'**il comprend les étapes suivantes :
a) pour extraire de l'eau desdits aliments dans une première chambre (2), les produits étant soumis à un débit d'air de vitesse uniforme pour tous les produits à l'intérieur de ladite chambre (2), ladite vitesse étant supérieure à une valeur minimum préréglée, de telle sorte que le nombre de Biot puisse être supérieur à 100 pour tous les produits à l'intérieur de ladite chambre,
b) pour augmenter l'activité de l'eau en surface desdits produits dans une seconde chambre (3), lesdits produits étant soumis à une phase de repos sans le débit d'air de l'étape a) ;
c) pour alterner cycliquement les étapes a) et b), jusqu'à ce qu'une perte de poids prédéterminée desdits produits soit atteinte selon le type de produit à sécher.

2. Procédé selon la revendication 1, **caractérisé en ce qu'**il comprend l'étape de détermination du poids et des caractéristiques physico-chimiques desdits produits et d'ajuster la durée pendant laquelle lesdits produits resteront aux étapes a) et b), selon la valeur dudit poids et desdites caractéristiques.

3. Procédé selon la revendication 1 ou 2, **caractérisé en ce qu'**il comprend l'étape de détermination du poids et des caractéristiques physico-chimiques desdits produits et d'ajuster la vitesse de l'air dans ladite étape a), selon la valeur dudit poids et desdites caractéristiques.

4. Procédé selon une quelconque des revendications 2 et 3, **caractérisé en ce qu'**il comprend l'étape de détermination du poids et des caractéristiques physico-chimiques desdits produits et d'ajuster la température et l'humidité de l'air dans lesdites étapes a) et b), selon la valeur dudit poids et desdites caractéristiques.

5. Procédé selon la revendication 1, **caractérisé en ce que** les étapes a) et b) sont réalisées alors que le produit est continuellement en mouvement à l'intérieur desdites chambres (2, 3).

6. Procédé selon la revendication 1, **caractérisé en ce que** lesdits produits alimentaires sont des produits de viande.

7. Installation pour réaliser le procédé de séchage des produits alimentaires selon la revendication 1, comprenant au moins une première chambre (2) pour extraire l'eau desdits produits comprenant des moyens pour apporter un débit d'air auxdits produits, **caractérisée en ce qu'**elle comprend au moins une seconde chambre (3) pour réaliser ladite phase de repos de l'étape b), des moyens (5, 4) pour déplacer alternativement lesdits produits d'une chambre à l'autre, et **en ce que** ladite première chambre (2) est allongée, comme un tunnel, sa largeur étant inférieure à une valeur maximale préréglée afin que la vitesse dudit débit d'air soit uniforme en tout point de ladite première chambre (2).

8. Installation selon la revendication 7, **caractérisée en ce qu'**elle comprend des moyens pour déterminer le poids et les caractéristiques physico-chimiques desdits produits lorsque ledit procédé est en cours de réalisation.

9. Installation selon la revendication 8, **caractérisée en ce qu'**elle comprend des moyens pour ajuster la vitesse de l'air de l'étape a), selon la valeur dudit poids et desdites caractéristiques.

10. Installation selon la revendication 8 ou 9, **caractérisée en ce qu'**elle comprend des moyens pour ajuster la durée durant laquelle les produits resteront dans les étapes a) et b), selon la valeur dudit poids et desdites caractéristiques.

11. Installation selon une quelconque des revendications 8, 9 et 10, **caractérisée en ce qu'**elle comprend des moyens pour ajuster l'humidité et la température de l'air dans les étapes a) et b), selon la valeur dudit poids et desdites caractéristiques.

12. Installation selon une quelconque des revendications 7 à 11, **caractérisée en ce qu'**elle comprend des moyens pour continuellement déplacer lesdits produits alimentaires à l'intérieur desdites première (2) et seconde (3) chambres.

13. Installation selon la revendication 7, **caractérisée en ce que** la vitesse dudit débit d'air est telle qu'elle permet au nombre de Biot d'être supérieur à 100 pour tous les produits à l'intérieur de ladite première chambre (2).

14. Utilisation de l'installation selon la revendication 7, pour sécher simultanément les lots de produits alimentaires avec des dates de production distribués tout au long de la durée.
